# EUROPÄISCHE PATENTSCHRIFT

(11) **EP 1 476 483 B1**
(45) Veröffentlichungstag und Bekanntmachung des Hinweises auf die Patenterteilung: **23.03.2011**
(21) Anmeldenummer: 03704500.2
(22) Anmeldetag: 30.01.2003
(51) Int. Cl.: C08F 293/00, C08L 53/00, C09D 153/00, C09J 153/00

(54) **VERFAHREN ZUR HERSTELLUNG WÄSSRIGER DISPERSIONEN VON BLOCKMISCHPOLYMERISATEN**
METHOD FOR PRODUCING AQUEOUS DISPERSIONS OF BLOCK COPOLYMERS
PROCEDE POUR PRODUIRE DES DISPERSIONS AQUEUSES DE COPOLYMERES SEQUENCES

(30) Priorität: 20.02.2002 DE 10206983
(43) Veröffentlichungstag der Anmeldung: 17.11.2004
(73) Patentinhaber: BASF Coatings GmbH, 48165 Münster (DE)
(72) Erfinder: BREMSER, Wolfgang, 48165 Münster (DE); AUSTRUP, Elke, 59394 Nordkirchen (DE); CLAUSS, Reinhold, 48565 Steinfurt (DE); PODLASKI-PYZIK, Beate, 48165 Münster (DE); STEINER, Hans-Peter, 48324 Sendenhorst (DE); STOCKBRINK, Ute, 48282 Emsdetten (DE)
(74) Vertreter: Leifert & Steffan
(86) Internationale Anmeldenummer: PCT/EP2003/000914
(87) Internationale Veröffentlichungsnummer: WO 2003/070799

(56) Entgegenhaltungen:
- WO-A-00/37507
- WO-A-00/39169
- WO-A-93/22351
- WO-A-93/22355
- WO-A-97/13792
- DE-A- 10 126 651
- DE-A- 19 704 714
- US-A- 5 807 937

## Beschreibung

Die vorliegende Erfindung betrifft ein Verfahren zur Herstellung wässriger Blockmischpolymerisate.

Blockmischpolymerisate, die durch ein- oder mehrstufige radikalische Copolymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in wässrigen Medien hergestellten werden, und ihre Verwendung als Bindemittel in Beschichtungsstoffen, insbesondere Wasserbasislacken (vgl. die deutsche Patentanmeldung DE 199 30 665 A1), Füllern und Steinschlagschutzgrundierungen (vgl. die deutsche Patentanmeldung DE 199 30 067 A1) und Klarlacken (vgl. die deutsche Patentanmeldung DE 199 30 664 A1), sind bekannt.

Dokument WO0037507 und Dokument WO0039169 beschreiben ein Verfahren zur Herstellung von wässrigen Dispersionen von Blockmischpolymerisaten durch multistufige Blockmischpolymerisation.

Dokument US5807937 beschreibt ein ATRP-Verfahren zur Herstellung von Dispersionen von Blockmischpolymerisaten. DE19704714 und WO9322351 beschreiben auch ein Verfahren zur Herstellung von wässrigen Dispersionen von Blockmischpolymerisaten.

Blockmischpolymerisate, die durch ein- oder mehrstufige radikalische Copolymerisation von
(a) mindestens einem olefinisch ungesättigten Monomer und
(b) mindestens einem vom olefinisch ungesättigten Monomer (a) verschiedenen olefinisch ungesättigten Monomer der allgemeinen Formel I

   **R¹R²C=CR³R⁴** (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wässrigen Medium hergestellten werden, und ihre Verwendung als Emulgatoren werden in der nicht vorveröffentlichten deutschen Patentanmeldung DE 101 26 651.0 beschrieben.

Bislang werden die Blockmischpolymerisate bzw. deren wässrige Dispersionen hergestellt, indem man in einer ersten Stufe (1) mindestens ein Monomer (b) mit mindestens einem Monomer (a), vorzugsweise einem hydrophilen Monomer (a), zu einem Copolymerisat oder einem Makroinitiator umsetzt. Dieses Copolymerisat oder dieser Makroinitiator wird dann nach seiner Isolierung oder unmittelbar in der Reaktionsmischung, vorzugsweise unmittelbar in der Reaktionsmischung, in mindestens einer weiteren Stufe (2) mit mindestens einem weiteren Monomer (a), vorzugsweise einem hydrophoben Monomeren (a), unter radikalischen Bedingungen umgesetzt. Bevorzugt wird die Umsetzung in der Stufe (2) in Abwesenheit eines Initiators der radikalischen Polymerisation durchgeführt.

Dabei können die Stufen (1) und (2) auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und den gewünschten Eigenschaften umgesetzt, wonach mindestens ein weiteres Monomer (a) hinzugegeben und radikalisch polymerisiert wird.

In einer weiteren Ausführungsform werden von Anfang an mindestens zwei Monomere (a) eingesetzt, wobei das Monomer (b) zunächst mit einem der mindestens zwei Monomeren (a) zu dem Copolymerisat oder Makroinitiator reagiert, wonach das resultierende Copolymerisat öder der Makroinitiator oberhalb eines bestimmten Molekulargewichts auch mit dem oder den weiteren Monomeren (a) reagiert.

Bei diesen bekannten Verfahren resultiert der Festkörpergehalt der wässrigen Dispersionen der Blockmischpolymerisate aus der Zusammengabe der wässrigen Dispersionen der Makroinitiatoren und dem wässrigen Medium, das als Vorlage für die Blockmischpolymerisation in der Stufe (2) dient, oder die wässrigen Dispersionen der Blockmischpolymerisate werden nachträglich durch Zugabe von Wasser auf dem gewünschten Festkörpergehalt eingestellt.

Die bekannten Verfahren zur Herstellung der wässrigen Dispersionen von Blockmischpolymerisaten weisen aber das Problem auf, dass die Exothermie in der ersten Stufe (1) vergleichsweise hoch ist. Um die nachteiligen Folgen der Exothermie zu vermindern, müssen die Reaktionszeiten verlängert und ein höherer mess- und regeltechnischer Aufwand getrieben werden. Außerdem sind die Dispersionen der Stufe (1) wenig lagerstabil, wenn sie bei Reaktionstemperaturen < 90°C hergestellt werden, wie es für die Herstellung von wässrigen Dispersionen von Blockmischpolymerisaten eigentlich vorteilhaft wäre.

Die bekannten wässrigen Dispersionen von Blockmischpolymerisaten weisen bereits ein sehr gutes anwendungstechnisches Eigenschaftsprofil auf und können als Stabilisatoren von Dispersionen, Emulgatoren und als Beschichtungstoffen, Klebstoffe und Dichtungsmassen oder zu deren Herstellung verwendet werden.

Die bekannten wässrigen Dispersionen von Blockmischpolymerisaten müssen aber hinsichtlich der Teilchengröße, der Verfilmung, der Lagerstabilität und Standzeit ihrer Vorstufen (Copolymerisat oder Makroinitiator), der Benetzung, der Dispergierbarkeit, der Viskosität und des Koagulatanteils weiter verbessert werden.

Aufgabe der vorliegenden Erfindung ist es, ein Verfahren zur Herstellung wässriger Dispersionen von Blockmischpolymerisaten bereitzustellen, das die Nachteile des Standes der Technik nicht mehr länger aufweist, sondern Dispersionen liefert, die kleinere Teilchengrößen, bessere dispergierende Eigenschaften, eine bessere Verfilmung, eine bessere Benetzung von Substraten, eine niedrigere Viskosität und einen niedrigeren Koagulatanteil als die bekannten wässrigen Dispersionen haben. Insbesondere sollen die hierin enthaltenen Blockmischpolymerisate bei pH-Werten von 2 bis 12 sehr gut quellbar und dispergierbar sein. Die neuen wässrigen Dispersionen sollen auch bei niedrigen pH-Werten nach wie vor eine hervorragende emulgierende, stabilisierende und dispergierende Wirkung haben. Außerdem sollen die neuen wässrigen Dispersionen in einfacherer Weise als die bisher bekannten hergestellt werden können. Nicht zuletzt sollen die Vorstufen der Dispersionen der Blockmischpolymerisate (Copolymerisat oder Makroinitiator) aufgrund des neuen Verfahrens eine höhere Lagerstabilität und eine längere Standzeit haben.

Demgemäß wurde das Verfahren zur Herstellung von wässrigen Dispersionen von Blockmischpolymerisaten durch die zwei- oder mehrstufige, kontrollierte radikalische Blockmischpolymerisation in einem wässrigen Medium gefunden, bei dem man
(1) in einer ersten Sufe
   (a) mindestens ein olefinisch ungesättigtes Monomer und
   (b) mindestens ein vom olefinisch ungesättigten Monomer (a) verschiedenes olefinisch ungesättigtes Monomer der allgemeinen Formel I

      **R¹R²C=CR³R⁴** (I),

      worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
      copolymerisiert, wobei das in der Stufe (1) eingesetzte wässrige Medium mindestens die Gesamtmenge des wässrigen Mediums bildet, in dem das Blockmischpolymerisat dispergiert ist, und das in der Stufe (I) gebildete Copolymerisat in einer Menge von 0,1 bis 10 Gew.% bezogen auf die Gesamtmenge von wässrigem Medium und Copolymerisat, enthält, wonach man
(2) in einer zweiten Stufe mindestens ein weiteres Monomer (a) in der Gegenwart des in der ersten Stufe gebildeten Copolymerisats nach Zugabe geringer Mengen oder ohne Zugabe von radikalischen Initiatoren (co)polymerisiert.

Im Folgenden wird das Verfahren zur Herstellung von wässrigen Dispersionen von Blockmischpolymerisaten als »ertindungsgemäßes Verfahren« bezeichnet.

Im Hinblick der Technik war es überraschend und für den Fachmann nicht vorhersehbar, dass die Aufgabe, die der vorliegenden Erfindung zugrundeliegt, im Kern dadurch gelöst werden konnte, dass der Makroinitiator in der Stufe (1) in einer besonders hohen Verdünnung hergestellt wurde.

Besonders überraschte, dass durch diese Maßnahme Dispersionen von Blockmischpolymerisaten resultierten, die eine noch geringere Teilchengröße, eine noch bessere dispergierende Wirkung, eine noch bessere Verfilmung, eine noch bessere Benetzung von Substraten, eine noch niedrigere Viskosität und einen noch niedrigeren Koagulatanteil als die bekannten wässrigen Dispersionen hatten.

Noch mehr überraschte, dass die Blockmischpolymerisate bei pH-Werten von 2 bis 12 sehr gut quellbar und dispergierbar waren, d.h. die Stabilität der betreffenden Dispersionen war nahezu unabhängig vom pH-Wert. Überraschend war, dass die Blockmischpolymerisate auch bei niedrigen pH-Werten nach wie vor eine hervorragende emulgierende, stabilisierende und dispergierende Wirkung aufwiesen.

Vor allem aber überraschte, dass die neuen Blockmischpolymerisate in einfacherer Weise hergestellt werden konnten als die des Standes der Technik. Insbesondere war bei dem erfindungsgemäßen Verfahren die Exothermie in der ersten Stufe (1) nicht so ausgeprägt wie bei den Verfahren des Standes der Technik, weswegen das erfindungsgemäße Verfahren problemlos in größeren Ansätzen, beispielsweise im Tonnenmaßstab, durchgeführt werden konnte, ohne dass ein Durchgehen des Reaktors zu befürchten war. Insbesondere überraschte dabei, dass aufgrund des erfindungsgemäßen Verfahrens die Vorstufen der Blockmischpolymerisate (Copolymerisat oder Makroinitiator) eine deutlich verbesserte Stabilität und Standzeit aufwiesen als die des Standes der Technik.

Der Festkörpergehalt der in erfindungsgemäßer Verfahrensweise hergestellten Dispersion kann sehr breit variieren und richtet sich nach den Erfordernissen des Einzelfalls. Vorzugsweise liegt er bei 10 bis 80, bevorzugt 15 bis 75, besonders bevorzugt 20 bis 70, ganz besonders bevorzugt 25 bis 65 und insbesondere 30 bis 60 Gew.%, jeweils bezogen auf die Gesamtmenge der erfindungsgemäßen Dispersion.

Der wesentliche Bestandteil der erfindungsgemäßen Dispersionen ist mindestens ein Blockmischpolymerisa, das durch die kontrollierte zwei- oder mehrstufige radikalische Blockmischpolymerisation in einem wässrigen Medium hergestellt wird.

Das Blockmischpolymerisat ist ein Polymer oder Oligomer, insbesondere ein Polymer, vorzugsweise mit anionischen und/oder potenziell anionischen funktionellen Gruppen. Vorzugsweise werden die anionischen und potenziell anionischen funktionellen Gruppen aus der Gruppe, bestehend aus Carbonsäure-, Sulfonsäure- und Phosphonsäuregruppen, sauren Schwefelsäure- und Phosphorsäureestergruppen sowie Carboxylat-, Sulfonat-, Phosphonat-, Sulfatester- und Phosphatestergruppen, insbesondere Carbonsäure- und Carboxylatgruppen, ausgewählt.

Hier und im Folgenden werden unter Polymeren Verbindungen verstanden, die im statistischen Mittel mehr als 10 Monomereinheiten im Molekül enthalten. Unter Oligomeren werden Verbindungen verstanden, die im statistischen Mittel 2 bis 15 Monomereinheiten im Molekül enthalten. Ergänzend wird hierzu auf Römpp Lexikon Lacke und Druckfarben, Georg Thieme Verlag, Stuttgart, New York, 1998, Seite 425, »Oligomere«, und Seite 464, »Polymere«, verwiesen.

Beispiele gut geeigneter Monomere (a), enthaltend die vorstehend beschriebenen anionischen und/oder potenziell anionischen funktionellen Gruppen, sind Acrylsäure, beta-Carboxyethylacrylat, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester, insbesondere Acrylsäure und Methacrylsäure.

Neben den vorstehend beschriebenen, anionische und/oder potenziell anionische funktionelle Gruppen enthaltenden Monomeren (a) oder anstelle von diesen können hydrophile Monomere (a), die nichtionische hydrophile Gruppen enthalten, verwendet werden. Beispiele gut geeigneter hydrophiler Monomere (a) mit funktionellen Gruppen dieser Art sind omega-Hydroxy- oder omega-Methoxy-polyethylenoxid-1-yl-, omega-Methoxy-polypropylenoxid-1-yl-, oder omega-Methoxy-poly(ethylenoxid-co-polypropylenoxid)-1-yl-acrylat oder -methacrylat.

Zusätzlich zu diesen Monomeren (a) oder an Stelle von diesen können noch Monomere (a) eingesetzt werden, die keine der potenziell anionischen und/oder anionischen und keine der nichtionischen hydrophilen Gruppen enthalten.

Beispiele geeigneter olefinisch ungesättigter Monomere (a), die frei sind von potenziell anionischen oder anionischen funktionellen und nichtionischen hydrophilen Gruppen, sind
(1) im wesentlichen säuregruppenfreien Ester olefinisch ungesättigter Säuren, wie (Meth)Acrylsäure-, Crotonsäure-, Ethacrylsäure-, Vinylphosphonsäure- oder Vinylsulfonsäurealkyl- oder - cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat, -methacrylat, -crotonat, -ethacrylat oder -vinylphosphonat oder vinylsulfonat; cycloaliphatische (Meth)acrylsäure-, Crotonsäure-, Ethacrylsäure-, Vinylphosphonsäure- oder Vinylsulfonsäureester, insbesondere Cyclohexyl-, Isobornyl-, Dicyclopentadienyl-, Octahydro-4,7-methano-1H-inden-methanol- oder tert.-Butylcyclohexyl(meth)acrylat, -crotonat, -ethacrylat, -vinylphosphonat oder vinylsulfonat. Diese können in untergeordneten Mengen höherfunktionelle (Meth)Acrylsäure-, Crotonsäure- oder Ethacrylsäurealkyl- oder -cycloalkylester wie Ethylengylkol-, Propylenglykol-, Diethylenglykol-, Dipropylenglykol-, butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropantri(meth)acrylat; oder Pentaerythrittetra(meth)acrylat sowie die analogen Ethacrylate oder Crotonate enthalten. Im Rahmen der vorliegenden Erfindung sind hierbei unter untergeordneten Mengen an höherfunktionellen Monomeren (1) solche Mengen zu verstehen, welche nicht zur Vernetzung oder Gelierung der Blockmischpolymerisate (A) führen, es sei denn, sie sollen in der Form von vernetzten Mikrogelteilchen vorliegen;
(2) Monomere, die mindestens eine Hydroxylgruppe oder Hydroxymethylaminogruppe pro Molekül tragen und im wesentlichen säuregruppenfrei sind, wie
   - Hydroxyalkylester von alpha,beta-olefinisch ungesättigten Carbonsäuren, wie Hydroxyalkylester der Acrylsäure, Methacrylsäure und Ethacrylsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat oder - ethacrylat; 1,4-Bis(hydroxymethyl)cyclohexan-, Octahydro-4,7-methano-1H-inden-dimethanol- oder Methylpropandiolmonoacrylat, -monomethacrylat, - monoethacrylat oder -monocrotonat; oder Umsetzungsprodukte aus cyclischen Estern, wie z.B. epsilon-Caprolacton und diesen Hydroxyalkylestern;
   - olefinisch ungesättigte Alkohole wie Allylalkohol;
   - Allylether von Polyolen wie Trimethylolpropanmonoallylether oder Pentaerythritmono-, -di- oder -triallylether. Die höherfunktionellen Monomeren (1) werden im allgemeinen nur in untergeordneten Mengen verwendet. Im Rahmen der vorliegenden Erfindung sind hierbei unter untergeordneten Mengen an höherfunktionellen Monomeren solche Mengen zu verstehen, welche nicht zur Vernetzung oder Gelierung der Blockmischpolymerisate (A) führen, es sei denn, sie sollen in der Form von vernetzten Mikrogelteilchen vorliegen;
   - Umsetzungsprodukte von alpha,beta-olefinisch Carbonsäuren mit Glycidylestern einer in alpha-Stellung verzweigten Monocarbonsäure mit 5 bis 18 Kohlenstoffatomen im Molekül. Die Umsetzung der Acryl- oder Methacrylsäure mit dem Glycidylester einer Carbonsäure mit einem tertiären alpha-Kohlenstoffatom kann vorher, während oder nach der Polymerisationsreaktion erfolgen. Bevorzugt wird als Komponente (a1) das Umsetzungsprodukt von Acryl- und/oder Methacrylsäure mit dem Glycidylester der Versatic®-Säure eingesetzt. Dieser Glycidylester ist unter dem Namen Cardura® E10 im Handel erhältlich. Ergänzend wird auf Römpp Lexikon Lacke und Druckfarben, Georg Thieme Verlag, Stuttgart, New York, 1998, Seiten 605 und 606, verwiesen;
   - Formaldehydaddukte von Aminoalkylestern von alpha,beta-olefinisch ungesättigten Carbonsäuren und von alpha,beta-ungesättigten Carbonsäureamiden, wie N-Methylol- und N,N-Dimethylol-aminoethylacrylat, -aminoethylmethacrylat, -acrylamid und -methacrylamid; sowie
   - Acryloxysilangruppen und Hydroxylgruppen enthaltende olefinisch ungesättigte Monomere, herstellbar durch Umsetzung hydroxyfunktioneller Silane mit Epichlorhydrin und anschließender Umsetzung des Zwischenprodukts mit einer alpha,beta-olefinisch ungesättigten Carbonsäure, insbesondere Acrylsäure und Methacrylsäure, oder ihren Hydroxyalkylestern;
(3) Vinylester von in alpha-Stellung verzweigten Monocarbonsäuren mit 5 bis 18 Kohlenstoffatomen im Molekül, wie die Vinylester der Versatic®-Säüre, die unter der Marke VeoVa ® vertrieben werden;
(4) cyclische und/oder acyclische Olefine, wie Ethylen, Propylen, But-1-en, Pent-1-en, Hex-1-en, Cyclohexen, Cyclopenten, Norbonen, Butadien, Isopren, Cylopentadien und/oder Dicyclopentadien;
(5) Amide von alpha,beta-olefinisch ungesättigten Carbonsäuren, wie (Meth)Acrylsäureamid, N-Methyl -, N,N-Dimethyl-, N-Ethyl-, N,N-Dimethyl-, N-Propyl-, N,N-Dipropyl, N-Butyl-, N,N-Dibutyl- und/oder N,N-Cyclohexyl-methyl-(meth)acrylsäureamid;
(6) Epoxidgruppen enthaltenden Monomere, wie der Glycidylester der Acrylsäure, Methacrylsäure, Ethacrylsäure, Crotonsäure, Maleinsäure, Fumarsäure und/oder Itaconsäure;
(7) vinylaromatischen Kohlenwasserstoffe, wie Styrol, Vinyltoluol oder alpha-Alkylstyrole, insbesondere alpha-Methylstyrol;
(8) Nitrile, wie Acrylnitril oder Methacrylnitril;
(9) Vinylverbindungen, ausgewählt aus der Gruppe, bestehend aus Vinylhalogeniden wie Vinylchlorid, Vinylfluorid, Vinylidendichlorid, Vinylidendifluorid; Vinylamiden, wie N-Vinylpyrrolidon; Vinylethern wie Ethylvinylether, n-Propylvinylether, Isopropylvinylether, n-Butylvinylether, Isobutylvinylether und Vinylcyclohexylether; sowie Vinylestern wie Vinylacetat, Vinylpropionat, und Vinylbutyrat;
(10) Allylverbindungen, ausgewählt aus der Gruppe, bestehend aus Allylethern und -estern, wie Propylallylether, Butylallylether, Ethylenglykoldiallylether Trimethylolpropantriallylether oder Allylacetat oder Allylpropionat; was die höherfunktionellen Monomere betrifft, gilt das vorstehend Gesagte sinngemäß; und
(11) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen, wie Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,014 A1 in den Spalten 5 bis 9, in der DE 44 21 823 A1 oder in der internationalen Patentanmeldung WO 92/22615 auf Seite 12, Zeile 18, bis Seite 18, Zeile 10, beschrieben sind. Vorzugsweise werden Monomere (a) mit mindestens einer anionischen und/oder potenzielle anionischen funktionellen Gruppe eingesetzt.

Als Monomere (b) werden Verbindungen der allgemeinen Formel I verwendet.

In der allgemeinen Formel I stehen die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste, mit der Maßgabe, dass mindestens zwei der variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder -Butylcyclohex-1-yl.

Beispiele geeigneter Arylreste sind Phenyl, Naphthyl oder Biphenylyl.

Beispiele geeigneter Alkylarylreste sind Benzyl oder Ethylen- oder Propan-1,3-diyl-benzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, - Propyl- oder -Butylphen-1-yl.

Beispiele geeigneter Arylcycloalkylreste sind 2-, 3- oder 4-Cyclohexylphen-1-yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; und/oder Hydroxylgruppen.

Beispiele für erfindungsgemäß besonders bevorzugt verwendete Monomere (b) sind Diphenylethylen, Dinaphthalinethylen, cis- oder trans-Stilben oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Blockmischpolymerisate ist Diphenylethylen von ganz besonderem Vorteil und wird deshalb erfindungsgemäß ganz besonders bevorzugt verwendet.

Jedes der vorstehend genannten Monomeren (a) kann für sich alleine mit dem Monomeren (b) polymerisiert werden. Erfindungsgemäß ist es indes von Vorteil, mindestens zwei Monomere (a) einzusetzen, weil hierdurch das Eigenschaftsprofil der in der Stufe (1) resultierenden Copolymerisate in besonders vorteilhafter Weise sehr breit variiert und dem jeweiligen Verwendungszweck der erfindungsgemäßen Dispersionen ganz gezielt angepaßt werden kann. Vorzugsweise werden die Monomeren (a) so ausgewählt, dass das Eigenschaftsprofil der Blockmischpolymerisate im wesentlichen von den vorstehend beschriebenen (Meth)Acrylatmonomeren (a) bestimmt wird, wobei die Monomeren (a), die anderen Monomerklassen entstammen, dieses Eigenschaftsprofil in vorteilhafter Weise breit und gezielt variieren.

Insbesondere können in dieser Weise in die Blockmischpolymerisate funktionelle Gruppen eingebaut werden, durch die die Blockmischpolymerisate hydrophil werden, so dass sie in wässrigen Medien besonders gut dispergiert oder gelöst werden können.

Außerdem können reaktive funktionelle Gruppen eingebaut werden, die mit komplementären reaktiven funktionellen Gruppen thermische Vernetzungsreaktionen eingehen können. Außerdem können funktionelle Gruppen eingebaut werden, die den Blockmischpolymerisaten selbstvernetzende Eigenschaften verleihen, wie N-Methylol- oder N-Alkoxymethylgruppen.

Nicht zuletzt können in die Blockmischpolymerisate mindestens eine der nachstehend beschriebenen reaktiven funktionellen Gruppen eingebaut werden, die mindestens eine mit aktinischer Strahlung aktivierbare Bindung enthalten.

Selbstverständlich können beide Arten von reaktiven funktionellen Gruppen in die Blockmischpolymerisate eingebaut werden. Die betreffenden Blockmischpolymerisate sind dann thermisch und mit aktinischer Strahlung härtbar, was von der Fachwelt auch als Dual-Cure bezeichnet wird.

Unter aktinischer Strahlung wird elektromagnetische Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, verstanden.

Die Blockmischpolymerisate können somit mindestens eine, vorzugsweise mindestens zwei, reaktive funktionelle Gruppen enthalten, welche mit komplementären reaktiven funktionellen Gruppen oder "mit sich selbst" thermische Vernetzungsreaktionen eingehen können. Die reaktiven funktionellen Gruppen können dabei über die Monomeren (a) in die Blockmischpolymerisate eingebracht oder nach deren Synthese durch polymeranaloge Reaktionen eingeführt werden. Dabei ist darauf zu achten, dass die reaktiven funktionellen Gruppen keine unerwünschten Reaktionen miteinander oder mit dem wässrigen Medium eingehen, wie beispielsweise eine unerwünschte Salzbildung, die Bildung unlöslicher Niederschläge oder eine vorzeitige Vernetzung, was alles die Stabilität der erfindungsgemäße Dispersion nachteilig beeinflusst.

Beispiele geeigneter erfindungsgemäß zu verwendender komplementärer reaktiver funktioneller Gruppen, welche thermisch indizierte Vernetzungsreaktionen eingehen, sind in der folgenden Übersicht zusammengestellt. In der Übersicht steht die Variable R⁵ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste. Beispiele geeigneter Reste dieser Art sind die vorstehend bei den Resten R¹, R², R³ und R⁴ aufgeführten.

### Übersicht: Beispiele komplementärer reaktiver funktioneller Gruppen

### Reaktive Gruppe und komplementäre reaktive Gruppe

| | |
|---|---|
| -SH | -C(O)-OH |
| -OH | -C(O)-O=C(O)- |
| | -NH-C(O)-OR⁵ |
| | -CH₂-OH |
| | -CH₂-O-CH₃ |
| | -NH-C(O)-CH(-C(O)OR⁵)₂ |
| | -NH-C(O)-CH(-C(O)OR⁵)(-C(O)-R⁵) |
| | >Si(OR⁵)₂ |
| -C(O)-OH | O |
| | -CH-CH₂ |
| -O-C(0)-CR⁵=CH₂ | -OH |
| -O-CR=CH₂ | -C(O)-CH₂-C(O)-R⁵ |
| | -CH=CH₂ |

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff Wasserstoff-Einzelbindungen oder Kohlenstoff-Kohlenstoff-, Kohlenstoff-Sauerstoff-, Köhlenstöff-Stickstoff-, Kohlenstoff-Phosphor -oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die bevorzugte reaktive Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei Doppelbindungen, insbesondere eine Doppelbindung, zu verwenden.

Die mit aktinischer Strahlung aktivierbaren Bindungen können über Kohlenstoff-Kohlenstoffbindungen oder Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon- oder Sulfoxidgruppen, insbesondere aber über Kohlenstoff-Kohlenstoff-Bindungen, Carbonsäureestergruppen und Ethergruppen, mit der verknüpfenden Gruppe L verbunden sein.

Besonders bevorzugte reaktive funktionelle Gruppen sind daher (Meth)Acrylat-, Ethacrylat-, Crotonat-, Cinnamat-, Vinylether-, Vinylester-, Dicyclopentadienyl-, Nörbornenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Methcrylatgruppen.

Vorzugsweise werden diese reaktiven funktionellen Gruppen über polymeranaloge Reaktionen in die Blockmischpolymerisate eingebaut.

Von den vorstehend beschriebenen reaktiven funktionellen Gruppen werden die Hydroxylgrupppen ganz besonders bevorzugt eingesetzt.

Erfindungsgemäß werden die Blockmischpolymerisate hergestellt, indem man in einer ersten Stufe (1) mindestens ein Monomer (b) mit mindestens einem Monomer (a), vorzugsweise mit einem Monomer (a), das mindestens eine potenziell anionische oder anionische funktionelle Gruppe enthält, zu einem Copolymerisat oder einem Makroinitiator umsetzt. Dieses Copolymerisat oder dieser Makroinitiator wird dann vorzugsweise unmittelbar in der Reaktionsmischung in mindestens einer weiteren Stufe (2) mit mindestens einem weiteren Monomer (a), das vorzugsweise keine hydrophilen Gruppen enthält, unter radikalischen Bedingungen umgesetzt.

Erfindungsgemäß wird Umsetzung in der Stufe (2) nach der Zugabe einer geringen Menge eines Initiators der radikalischen Polymerisation oder ohne eine solche Zugabe durchgeführt. Unter geringen Mengen sind Mengen zu verstehen, die unterhalb der Mengen an Initiatoren liegen, wie sie in der Stufe (1) jeweils eingesetzt wurden. Dies bedeutet, dass Umsetzung in der Stufe (2) in völliger Abwesenheit eines Initiators durchgeführt oder durch die Reste des in der Stufe (1) eingesetzten Initiators oder durch einen in der vergleichbaren Menge zugesetzten Initiator initiiert und durchgeführt werden kann.

Erfindungsgemäß bildet das in der Stufe (1) eingesetzte wässrige Medium mindestens die Gesamtmenge, insbesondere die Gesamtmenge, des wässrigen Mediums, in dem das Blockmischpolymerisat nach seiner Herstellung dispergiert vorliegt.

Erfindungsgemäß ist es von Vorteil, wenn das wässrige Medium das in der Stufe (1) gebildete Copolymerisat in einer Menge von, bezogen auf die Gesamtmenge von wässrigem Medium und Copolymerisat, 0,1 bis 10, vorzugsweise 1 bis 8 und insbesondere 2 bis 7 Gew.% enthält.

Erfindungsgemäß ist es des weiteren von Vorteil, in der Stufe (1) mindestens ein Ausgangsprodukt und/oder mindestens einen Cokatalysator vorzulegen, wodurch mindestens ein Zulauf mit der entsprechenden Mess- und Regeltechnik entfallen kann. Das erfindungsgemäße Verfahren bietet den besonderem Vorteil, dass für die Durchführung der Stufe (1) alle Ausgangsprodukte vorgelegt und copolymerisiert werden können (Batch-Verfahren), ohne dass hierbei Probleme der Exothermie auftreten. Hierdurch resultieren erfindungsgemäße Dispersionen mit noch geringerer Teilchengröße.

Die Stufen (1) und (2) können auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und den gewünschten Eigenschaften umgesetzt, wonach mindestens ein weiteres Monomer (a) hinzugegeben und radikalisch polymerisiert wird. In einer weiteren Ausführungsform werden von Anfang an mindestens zwei Monomere (a) eingesetzt, wobei das Monomer (b) zunächst mit einem der mindestens zwei Monomeren (a) reagiert und anschließend das resultierende Copolymerisat oberhalb eines bestimmten Molekulargewichts auch mit dem oder den weiteren Monomeren (a) reagiert. Dabei können die Stufen (1) und (2) auch im Batch-Verfahren, d. h. ohne Zulauf, durchgeführt werden, indem man alle Ausgangsprodukte dieser beiden Stufen gemeinsam vorlegt und copolymerisiert.

Vorzugsweise liegt das Gewichtsverhältnis des in der ersten Stufe (1) gebildeten Copolymerisats oder Makroinitators zu dem oder den weiteren Monomer(en) (a) der weiteren Stufe(n) (2) bei 1 : 25 bis 5 : 1, bevorzugt 1 : 22 bis 4 : 1, besonders bevorzugt 1 : 18 bis 3 : 1, ganz besonders bevorzugt 1 : 16 bis 2 : 1 und insbesondere 1 : 15 bis 1 : 1.

Je nach Reaktionsführung ist es dabei möglich, Blockmischpolymerisate mit Block-, Multiblock-, Gradienten(co)polymer-, Stern- und Verzweigungsstrukturen, die ggf. auch an den Endgruppen funktionalisiert sind, herzustellen.

Als Beispiele für die in der erste Stufe (1) einsetzbaren Initiatoren der radikalischen Polymerisation werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethylnexanoat oder tert.-butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether, oder eine Kombination eines nicht oxidierenden Initiators mit Wasserstoffperoxid.

Vorzugsweise werden in der Stufe (1) vergleichsweise große Mengen an radikalischem Initiator zugegeben, wobei der Anteil des Initiators am Reaktionsgemisch, jeweils bezogen auf die Gesamtmenge der Monomeren (a) und (b) sowie des Initiators, besonders bevorzugt 0,5 bis 50 Gew.-%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuss eingesetzt wird.

Die zwei- oder mehrstufige radikalische Copolymerisation bzw. Blockmischpolymerisation wird in einem wässrigen Medium durchgeführt.

Das wässrige Medium enthält im wesentlichen Wasser. Hierbei kann das wässrige Medium in untergeordneten Mengen gelöste feste, flüssige oder gasförmige, nieder- und/oder hochmolekulare Stoffe, insbesondere Basen, enthalten, sofern diese nicht die Copolymerisation in negativer Weise beeinflussen oder gar hemmen und/oder zur Emission flüchtiger organischer Verbindungen führen. Im Rahmen der vorliegenden Erfindung ist unter dem Begriff "untergeordnete Menge" eine Menge zu verstehen, welche den wässrigen Charakter des wässrigen Mediums nicht aufhebt. Bei dem wässrigen Medium kann es sich aber auch um reines Wasser handeln.

Beispiele geeigneter Basen sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Di- und/oder Triethanolamin.

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 198 28 742 A1 oder EP 0 498 583 A1 oder in dem Artikel von K. Kataoka in Chemical Engineering Science, Band 50, Heft 9, 1995, Seiten 1409 bis 1416, beschrieben werden, in Betracht. Vorzugsweise wird die radikalische Copolymerisation in Rührkesseln oder Taylorreaktoren, durchgeführt, wobei die Taylorreaktoren so ausgelegt werden, dass auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt (vgl. die deutsche Patentanmeldung DE 198 28 742 A1).

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150 °C, ganz besonders bevorzugt 50 bis 120°C und insbesondere 55 bis 110 °C gewählt wird.

Bei Verwendung besonders leicht flüchtiger Monomere (a) und/oder (b) kann die Copolymerisation auch unter Druck, vorzugsweise unter 1,5 bis 3.000 bar, bevorzugt 5 bis 1.500 und insbesondere 10 bis 1.000 bar mit durchgeführt werden.

Die nach dem erfindungsgemäßen Verfahren hergestellten Dispersionen, enthaltend mindestens eines der vorstehend beschriebenen Blockmischpolymerisate, sind außerordentlich vielseitig einsetzbar. So können sie als Emulgatoren, Stabilisatoren und Dispergiermittel, als Beschichtungstoffe, Klebstoffe und Dichtungsmassen oder zu deren Herstellung sowie für die Herstellung von Formkörpern und Folien eingesetzt werden.

### Beispiele 1 bis 6

### Die Herstellung der erfindungsgemäßen Dispersionen von Blockmischpolymerisaten

### Beispiel 1:

In einem Reaktiongefäß, ausgerüstet mit einem Rührer und drei Zulaufgefäßen, wurden 1.361,7 Gewichtsteile deionisiertes Wasser vorgelegt und auf 75 °C erhitzt. Anschließend wurden bei dieser Temperatur zur Vorlage drei separate Zuläufe parallel und gleichmäßig zudosiert. Zulauf 1 bestand aus 24,4 Gewichtsteilen Acrylsäure, 44,0 Gewichtsteilen Methylmethacrylat und 3,6 Gewichtsteilen Diphenylethylen. Zulauf 2 bestand aus 23,8 Gewichtsteilen einer 25 Gew.% igen wäßrigen Ammoniaklösung. Zulauf 3 bestand aus einer Lösung von 5,4 Gewichtsteilen Ammoniumperoxodisulfat in 138,7 Gewichtsteilen deionisiertem Wasser. Die Zuläufe 1 bis 3 wurden während 30 Minuten zudosiert. Nach Beendigung der Zugabe wurde das Reaktionsgemisch während einer Stunde bei 75 °C gerührt. Anschließend wurde es auf 90 °C erhitzt.

Die Exothermie der ersten Stufe (1) war wenig ausgeprägt bzw. nicht vorhanden, sodass das Verfahren problemlos in größerem Maßstab durchgeführt werden konnte.

Bei 90 °C wurde über einen Zulauf 4 eine Monomermischung aus 260 Gewichtsteilen n-Butylmethyacrylat, 208 Gewichtsteilen Styrol, 334 Gewichtsteilen Hydroxyethylmethacrylat und 234,4 Gewichtsteilen Ethylhexylmethacrylat während vier Stunden gleichmäßig zudosiert. Nach Beendigung der Zugabe schloss sich eine zweistündige Nachpolymerisation bei 90 °C an. Die resultierende Dispersion wies einen Festkörpergehalt von 41,8 Gew.% auf und war vielseitig verwendbar.

### Beispiel 2:

Beispiel 1 wurde wiederholt, nur dass in der zweiten Stufe anstelle der dort beschriebenen Monomermischung eine Monomermischung aus 191,7 Gewichtsteilen n-Butyl methacrylat, 153,4 Gewichtsteilen Styrol, 93,3 Gewichtsteilen Hydroxypropylmethacrylat, 424,9 Gewichtsteilen Hydroxyethylmethacrylat und 173,1 Gewichtsteilen Ethylhexylmethacrylat verwendet wurde. Die resultierende Dispersion wies einen Festkörpergehalt von 41,7 Gew.% auf und war vielseitig verwendbar.

### Beispiel 3:

In einem Reaktiongefäß, ausgerüstet mit einem Rührer und drei Zulaufgefäßen, wurden 1.361,7 Gewichtsteile deionisiertes Wasser, 24,4 Gewichtsteile Methacrylsäure und 19,8 Gewichtsteile einer 25 Gew.% igen wäßrigen Ammoniaklösung vorgelegt und auf 75 °C erhitzt. Bei dieser Temperatur wurden zwei separate Zuläufe parallel und gleichmäßig zu der Vorlage zudosiert. Zulauf 1 bestand aus 44 Gewichtsteilen Methylmethacrylat und 3,6 Gewichtsteilen Diphenylethylen. Zulauf 2 bestand aus einer Lösung von 5,4 Gewichtsteilen Ammoniumperoxodisulfat in 128,7 Gewichtsteilen deionisiertem Wasser. Die Zuläufe 1 und 2 wurden innerhalb von 30 Minuten zudosiert. Nach der Beendigung der Zugabe wurde die resultierende Reaktionsmischung während einer Stunde bei 75 °C nachpolymerisiert. Anschließend wurde die Reaktionsmischung auf 90 °C erhitzt. Bei dieser Temperatur wurde aus dem Zulauf 3 während vier Stunden eine Monomermischung aus 260 Gewichtsteilen n-Butylmethacrylat, 208 Gewichtsteilen Styrol, 334 Gewichtsteilen Hydroxyethylmethacrylat und 234,4 Gewichtsteilen Ethylhexylmethacrylat gleichmäßig zudosiert. Nach Beendigung der Zugabe wurde Reaktionsmischung während zwei Stunden bei 90°C nachpolymerisiert.

Die Dispersion wies einen besonders niedrigen Koagulatanteil auf und war niedrigviskos. Sie konnte mit nur drei statt vier Zuläufen hergestellt werden, was produktionstechnisch besonders vorteilhaft war.

### Beispiel 4:

In einem Reaktiongefäß, ausgerüstet mit einem Rührer und vier Zulaufgefäßen, wurden 1.361,7 Gewichtsteile deionisiertes Wasser vorgelegt und auf 75 °C erhitzt. Anschließend wurden bei dieser. Temperatur drei separate Zuläufe parallel und gleichmäßig während 30 Minuten zudosiert. Zulauf 1 bestand aus 24,4 Gewichtsteilen Acrylsäure, 44 Gewichtsteilen Methylmethacrylat, 3,6 Gewichtsteilen Diphenylethylen und 51,8 Gewichtsteilen n-Butylacrylat. Zulauf 2 bestand aus 23,8 Gewichtsteilen einer 25 Gew.% igen wäßrigen Ammoniaklösung. Zulauf 3 bestand aus einer Lösung von 5,4 Gewichtsteilen Ammoniumperoxodisulfat in 138,7 Gewichtsteilen Wasser. Nach Beendigung der Zugabe wurde die resultierende Redaktionsmischung während einer Stunde bei 75 °C nachpolymerisiert. Anschließend wurde sie auf 90 °C erhitzt. Bei dieser Temperatur wurde über den Zulauf 4 eine Mischung aus 165,8 Gewichtsteilen n-Butylmethacrylat, 103,6 Gewichtsteilen Styrol, 248,7 Gewichtsteile Hydroxyethylmethacrylat und 518,3 Gewichtsteilen Ethylhexylmethacrylat während vier Stunden gleichmäßig' zudosiert. Nach Beendigung der Zugabe wurde die Reaktionsmischung während zwei Stunden bei 90°C nachpolymerisiert. die resultierende Dispersion wies einen Festkörpergehalt von 42,6 Gew.% auf. Sie war niederviskos und wies einen sehr geringen Koagulatanteil auf. Somit konnten schon in der Stufe (1) ausgesprochen unpolare, d. h. hydrophobe, Monomere verwendet werden, was eine weitere vorteilhafte Variation der Eigenschaften der Blockmischpolymerisate gestattete, ohne dass es dabei wie bei den Verfahren des Standes der Technik zu einer verstärken Koagulatbildung kam. Ansonsten wies die Dispersion die gleichen vorteilhaften Eigenschaften wie die Dispersionen der Beispiele 1 bis 3 auf.

### Beispiel 5:

In einem Reaktiongefäß, ausgerüstet mit Rührer und einem Zulaufgefäß, wurden 1.361,7 Gewichtsteile deionisiertes Wasser, 19,8 Gewichtsteile Ammoniaklösung (25-prozentig), 24,4 Gewichtsteile Methacrylsäure, 44 Gewichtsteile Methylmethacrylat, 3,6 Gewichtsteile Diphenylethylen und 5,4 Gewichtsteile Ammoniumperoxodisulfat, gelöst in 128,7 Gewichtsteilen Wasser, eingewogen. Die Mischung wurden während einer Stunde auf 90 °C aufgeheizt. Anschließend wurde die Reaktionsmischung auf 90 °C erhitzt. Bei dieser Temperatur wurde aus dem Zulauf 3 während vier Stunden eine Monomermischung aus 260 Gewichtsteilen n-Butylmethacrylat, 208 Gewichtsteilen Styrol, 334 Gewichtsteilen Hydroxyethylmethacrylat und 234,4 Gewichtsteilen Ethylhexylmethacrylat gleichmäßig zudosiert. Nach Beendigung der Zugabe wurde die Reaktionsmischung während zwei Stunden bei 90°C nachpolymerisiert.

Die Dispersion wies so gut wie keinen Koagulatanteil auf und war besonders niedrigviskos. Sie konnte mit nur einem Zulauf hergestellt werden, was produktionstechnisch ganz besonders vorteilhaft war. Bei dem Batch-Verfahren der Stufe (1) traten keine Probleme der Exothermie auf.

### Beispiel 6:

In einem Reaktiongefäß wurden 1.409,9 Gewichtsteile deionisiertes Wasser vorgelegt und unter Rühren auf 75 °C erhitzt. Bei dieser Temperatur wurden nacheinander ohne Dosierung 44,0 Gewichtsteile Methylmethacrylat und 3,6 Gewichtsteile Diphenylethylen sowie eine Lösung von 5,4 Gewichtsteilen Ammoniumperoxodisulfat in 138,7 Gewichtsteilen deionisiertem Wasser zugegeben. Nach der Beendigung der Zugabe wurde das resultierende Reaktionsgemisch während einer Stunde bei 75 °C gerührt. Anschließend wurde sie auf 90 °C erhitzt. Bei dieser Temperatur wurde während vier Stunden eine Monomermischung aus 260 Gewichtsteilen n-Butylmethyacrylat, 208 Gewichtsteilen Styrol, 334 Gewichtsteilen Hydroxypropylmethacrylat und 234,4 Gewichtsteilen Ethylhexylmethacrylat zudosiert. Nach Beendigung der Zugabe wurde während zwei Stunden bei 90 °C nachpolymerisiert.

Die resultierende Dispersion wies einen Festkörpergehalt von 40,5 Gew.-% auf. Die mittlere Teilchengröße lag bei 120 nm (bestimmt mit Hilfe der Photonenkorrelationsspektroskopie). Obwohl in der Stufe (1) keine Monomere mit (potenziell) anionischen Gruppen einpolymerisiert worden waren, war die Dispersion stabil und feinteilig. Die hieraus hergestellten Filme wiesen eine signifikant verringerte Wasserempfindlichkeit auf.

## Patentansprüche

1. Verfahren zur Herstellung von wässrigen Dispersionen von Blockmischpolymerisaten durch die zwei- oder mehrstufige, kontrollierte radikalische Blockmischpolymerisation in einem wässrigen Medium, **dadurch gekennzeichnet, dass** man
(1) in einer ersten Stufe
(a) mindestens ein olefinisch ungesättigtes Monomer und
(b) mindestens ein vom olefinisch ungesättigten Monomer (a) verschiedenes olefinisch ungesättigtes Monomer der allgemeinen Formel I
R¹R²C=CR³R⁴ (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-, Arylalkyl- oder Arylcycloalkylreste stehen, mit der Maßgabe, dass mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
copolymerisiert, wobei das in der Stufe (1) eingesetzte wässrige Medium die Gesamtmenge des wässrigen Mediums bildet, in dem das Blockmischpolymerisat dispergiert ist, und das in der Stufe (1) gebildete Copolymerisat in einer Menge von 0,1 bis 10 Gew.-%, bezogen auf die Gesamtmenge von wässrigem Medium und Copolymerisat, enthält, wonach man
(2) in einer zweiten Stufe mindestens ein weiteres Monomer (a) in der Gegenwart des in der ersten Stufe gebildeten Copolymerisats nach Zugabe geringer Mengen oder ohne Zugabe von radikalischen Initiatoren (co)polymerisiert.

2. Das Verfahren nach Anspruch 1, **dadurch gekennzeichnet, dass** das Monomer (a) der Stufe (1) mindestens eine anionische und/oder potenziell anionische funktionelle Gruppe enthält.

3. Das Verfahren nach Anspruch 1 oder 2, **dadurch gekennzeichnet, dass** es sich bei den Arylresten R¹, R², R³ und/oder R⁴ der Monomeren (b) um Phenyl- oder Naphthylreste handelt.

4. Das Verfahren nach einem der Ansprüche 1 bis 3, **dadurch gekennzeichnet, dass** die Substituenten in den Resten R¹, R², R³ und/oder R⁴ der Monomeren (b) aus der Gruppe, bestehend aus elektronenziehenden oder elektronenschiebenden Atomen oder organischen Resten, ausgewählt werden.

5. Das Verfahren nach Anspruch 4, **dadurch gekennzeichnet, dass** die Substituenten aus der Gruppe, bestehend aus Halogenatomen, Nitril-, Nitro-, partiell oder vollständig halogenierten Alkyl-, Cycloalkyl-, Alkylcycloalkyl-, Cycloalkylalkyl, Aryl-, Alkylaryl-, Cycloalkylaryl-, Arylalkyl- und Arylcycloalkylreste; Aryloxy-, Alkyloxy- und Cycloalkyloxyresten; Arylthio-, Alkylthio- und Cycloalkylthioresten, ausgewählt werden.

6. Das Verfahren nach einem der Ansprüche 1 bis 5, **dadurch gekennzeichnet, dass** man in der Stufe (1) alle Ausgangsprodukte zusammen vorlegt und copolymerisiert.

7. Die wässrige Dispersion erhältlich nach dem Verfahren nach einem der Ansprüche 1 bis 6.

8. Verwendung der wässrigen Dispersionen von Blockmischpolymerisaten nach Anspruch 7 als Emulgatoren, Stabilisatoren und Dispergiermittel, als Beschichtungsstoffe, Klebstoffe und Dichtungsmassen oder zu deren Herstellung sowie für die Herstellung von Formkörpern und Folien.

## Claims

1. Process for preparing aqueous dispersions of block copolymers by two-stage or multistage controlled free radical block copolymerization in an aqueous medium, **characterized in that**
(1) in a first stage
(a) at least one olefinically unsaturated monomer and
(b) at least one olefinically unsaturated monomer other than the olefinically unsaturated monomer (a) and of the general formula I
**R¹R²C=CR³R⁴** (I)
in which radicals R¹, R², R³, and R⁴ each independently of one another stand for hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals with the proviso that at least two of the variables R¹, R², R³, and R⁴ stand for substituted or unsubstituted aryl, arylalkyl or arylcycloalkyl radicals, especially substituted or unsubstituted aryl radicals;
are copolymerized, the aqueous medium used in stage (1) forming the entirety of the aqueous medium in which the block copolymer is dispersed, and comprising the copolymer formed in stage (1) in an amount of 0.1% to 10% by weight, based on the total amount of aqueous medium and copolymer, and then
(2) in a second stage at least one further monomer (a) is (co)polymerized in the presence of the copolymer formed in the first stage, following the addition of small amounts, or without the addition, of free-radical initiators.

2. The process according to Claim 1, **characterized in that** the monomer (a) of stage (1) contains at least one anionic and/or potentially anionic functional group.

3. The process according to Claim 1 or 2, **characterized in that** the aryl radicals R¹, R², R³ and/or R⁴ of the monomers (b) are phenyl or naphthyl radicals.

4. The process according to one of Claims 1 to 3, **characterized in that** the substituents in the radicals R¹, R², R³ and/or R⁴ of the monomers (b) are selected from the group consisting of electron-withdrawing and electron-donating atoms and organic radicals.

5. The process according to Claim 4, **characterized in that** the substituents are selected from the group consisting of halogen atoms, nitrile, nitro, partially or fully halogenated alkyl, cycloalkyl, alkylcycloalkyl, cycloalkylalkyl, aryl, alkylaryl, cycloalkylaryl, arylalkyl, and arylcycloalkyl radicals; aryloxy, alkyloxy, and cycloalkyloxy radicals; and arylthio, alkylthio, and cycloalkylthio radicals.

6. The process according to one of Claims 1 to 5, **characterized in that** all of the starting products are introduced together and copolymerized in stage (1).

7. The aqueous dispersion obtainable by the process according to one of Claims 1 to 6.

8. Use of the aqueous dispersions of block copolymers according to Claim 7 as emulsifiers, stabilizers, and dispersants, as or to prepare coating materials, adhesives, and sealing compounds, and for producing moldings and films.

## Revendications

1. Procédé pour la préparation de dispersions aqueuses de copolymères à blocs par copolymérisation en blocs à deux étapes ou plus, par voie radicalaire, contrôlée, dans un milieu aqueux, **caractérisé en ce que**
(1) dans une première étape, on copolymérise
(a) au moins un monomère oléfiniquement insaturé et
(b) au moins un monomère oléfiniquement insaturé, différent du monomère (a) oléfiniquement insaturé, de formule générale I
R¹R²C=CR³R⁴ (I),
dans laquelle les radicaux R¹, R², R³ et R⁴ représentent, à chaque fois indépendamment les uns des autres, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle, substitués ou non substitués, à condition qu'au moins deux des variables R¹, R², R³ et R⁴ représentent des radicaux aryle, arylalkyle ou arylcycloalkyle, substitués ou non substitués, en particulier des radicaux aryle substitués ou non substitués,
où le milieu aqueux utilisé dans l'étape (1) forme la quantité totale du milieu aqueux, dans lequel le copolymère à blocs est dispersé et contient le copolymère formé dans l'étape (1) en une quantité de 0,1 à 10% en poids, par rapport à la quantité totale de milieu aqueux et de copolymère, puis
(2) dans une deuxième étape, on (co)polymérise au moins un autre monomère (a) en présence du copolymère formé dans la première étape après addition de faibles quantité ou sans addition d'initiateurs radicalaires.

2. Procédé selon la revendication 1, **caractérisé en ce que** le monomère (a) de l'étape (1) contient au moins un groupe fonctionnel anionique et/ou potentiellement anionique.

3. Procédé selon la revendication 1 ou 2, **caractérisé en ce qu'**il s'agit, pour les radicaux aryle R¹, R², R³ et/ou R⁴ des monomères (b) de radicaux phényle ou naphtyle.

4. Procédé selon l'une quelconque des revendications 1 à 3, **caractérisé en ce que** les substituants dans les radicaux R¹, R², R³ et/ou R⁴ des monomères (b) sont choisis dans le groupe constitué par des atomes ou des radicaux organiques attracteurs d'électrons ou déplaçant les électrons.

5. Procédé selon la revendication 4, **caractérisé en ce que** les substituants sont choisis dans le groupe constitué par les atomes d'halogène, les radicaux nitrile, nitro, les radicaux alkyle, cycloalkyle, alkylcycloalkyle, cycloalkylalkyle, aryle, alkylaryle, cycloalkylaryle, arylalkyle et arylcycloalkyle partiellement ou totalement halogénés; les radicaux aryloxy, alkyloxy et cycloalkyloxy; les radicaux arylthio, alkylthio et cycloalkylthio.

6. Procédé selon l'une quelconque des revendications 1 à 5, **caractérisé en ce qu'**on dispose au préalable dans l'étape (1) tous les produits de départ et on les copolymérise.

7. Dispersion aqueuse pouvant être obtenue selon le procédé selon l'une quelconque des revendications 1 à 6.

8. Utilisation des dispersions aqueuses de copolymères à blocs selon la revendication 7 comme émulsifiants, stabilisateurs et dispersants, comme substances de revêtement, adhésifs et masses d'étanchéité ou pour leur préparation ainsi que pour la préparation de corps façonnés et de feuilles.
